# EUROPEAN PATENT APPLICATION

(11) **EP 1 162 393 A2**
(43) Date of publication of application: **12.12.2001**
(21) Application number: 01113725.4
(22) Date of filing: 05.06.2001
(51) Int. Cl.: F16H 63/30

(54) **Single rail shift actuator for a manual transmission**

(30) Priority: 05.06.2000 US 209371 P
(71) Applicant: EATON CORPORATION, Cleveland, Ohio 44114-2584 (US)
(72) Inventor: Preston, David Michael, Clarkston, Michigan 48346 (US); Turner, David, Bloomfield Hills, Michigan 48304 (US)
(74) Representative: Patentanwälte Rüger, Barthelt & Abel

(57) **Abstract**

A single rail shift actuator for a manual transmission is disclosed herein. The shift actuator comprises a support rail adapted to be fixedly attached to a transmission case and has a plurality of slots disposed therein. Each slot houses an actuation pin and a resilient member. A camshaft is transversely and rotatably supported within the support rail. The camshaft has a plurality of radially and transversely disposed recesses which are formed thereon. Each recess corresponds to one of the actuation pins. A plurality of actuation sleeves are transversely and rotatably mounted on the camshaft. Each of the actuation sleeves has an aperture of receiving one of the actuation pins. Each of the actuation pins is at least partially disposed within each of the apertures. Only one actuation sleeve may be selected at a time for shifting the transmission. Each nonselected actuation sleeve is coupled to the support rail by a corresponding actuation pin. A selected actuation sleeve is coupled to the camshaft by rotation of the camshaft allowing an actuation pin to be urged into the corresponding aperture by a resilient member. A plurality of shift forks are provided for selecting and deselecting gears. Each shift fork is fixedly attached to one of the actuation sleeves. Rotation of the cam is provided by a rotation actuator and translation of the cam is provided by a translation actuator. As such, the present invention may be adapted to automate a manual transmission or may be operated by manual means.

## Description

### FIELD OF THE INVENTION

The present invention relates to a manual transmission for motor vehicles. More particularly, the present invention relates to a shift rail mechanism for a multiple gear manual transmission.

### BACKGROUND OF THE INVENTION

The gear shift mechanism of a manual transmission is generally provided with some means of preventing the accidental shift of more than one gear into driving engagement at a time. Various means have been disclosed for selectively engaging and disengaging the gears of a manual transmission while providing an interlock to prevent such an accidental shift. Another objective for a shift actuation system is to provide gear selection without incurring alignment problems.

The single rail shift mechanisms of the prior art provide several complex moving parts to enable gear selection. One solution was disclosed in U.S. Pat. No. 5,562,011 to Bartus. The '011 patent discloses a shift tube with a complex arrangement of ramps, cams, apertures and shift control patterns incorporated thereon. It would be advantageous to minimize the complexity of a single rail manual transmission actuator. It would be further advantageous to provide a single rail shift actuator that may be automated.

### SUMMARY OF THE INVENTION

A single rail shift actuator for a manual transmission comprises a support rail adapted to be fixedly attached to a transmission case, where the support rail has at least two slots disposed therein. Each slot houses an actuation pin and a resilient member. A camshaft is transversely and rotatably supported within the support rail. The camshaft has at least two radially and transversely disposed recesses formed thereon. Each recess corresponds with one of the actuation pins. At least two actuation sleeves are transversely and rotatably mounted on the camshaft. Each of the actuation sleeves has an aperture for receiving one of the actuation pins. Each of the actuation pins is at least partially disposed within each of the apertures. At least two shift forks for selecting and deselecting gears are provided. Each shift fork is fixedly attached to one of the actuation sleeves.

A rotation actuator for rotating a camshaft is provided to couple one of the actuation sleeves to the camshaft by aligning one of the recesses with one of the actuation pins. Aligning a recess with a corresponding actuation pin will cause the resilient member to urge the actuation pin into the recess. Gear selection is achieved by translating the cam with a translation actuator to cause the actuation sleeve to move in a transverse direction which will translate the shift fork to select or deselect gears.

A manual transmission assembly comprises a plurality of gears including forward gears and a reverse gear. A support rail is fixedly attached to a transmission case. The support rail has at least two slots disposed therein, where each slot houses an actuation pin and a resilient member. A camshaft is transversely and rotatably supported within the support rail. The camshaft has at least two radially and transversely disposed recesses formed thereon. Each recess corresponds with one of the actuation pins. At least two actuation sleeves are transversely and rotatably mounted on the camshaft. Each of the actuation sleeves has an aperture for receiving one of the actuation pins. Each of the actuation pins is at least partially disposed within each of the apertures. At least two shift forks are provided for selecting and deselecting gears. Each shift fork is fixedly attached to one of the actuation sleeves.

A rotation actuator is provided for rotating the camshaft to couple one of the actuation sleeves to the camshaft by aligning one of the recesses with one of the actuation pins, which causes the resilient member to urge the actuation pin into the recess. A translation actuator is also provided for translating the coupled actuation sleeve by translating the cam, which causes the actuation sleeve to translate the shift fork to select or deselect the gears.

Further objects, features and advantages of the present invention will become apparent to those skilled in the art from analysis of the following written description, the accompanying drawings and dependent claims.

### BRIEF DESCRIPTION OF THE DRAWINGS

FIG. 1 is a top view of a transmission assembly revealing gear sets and a single rail shift actuator according to the principles of the present invention.

FIG. 2 is a front view of a transmission assembly according to the principles of the present invention.

FIG. 3 is sectional view of FIG. 2 taken along section A-A revealing the operative elements of the present invention.

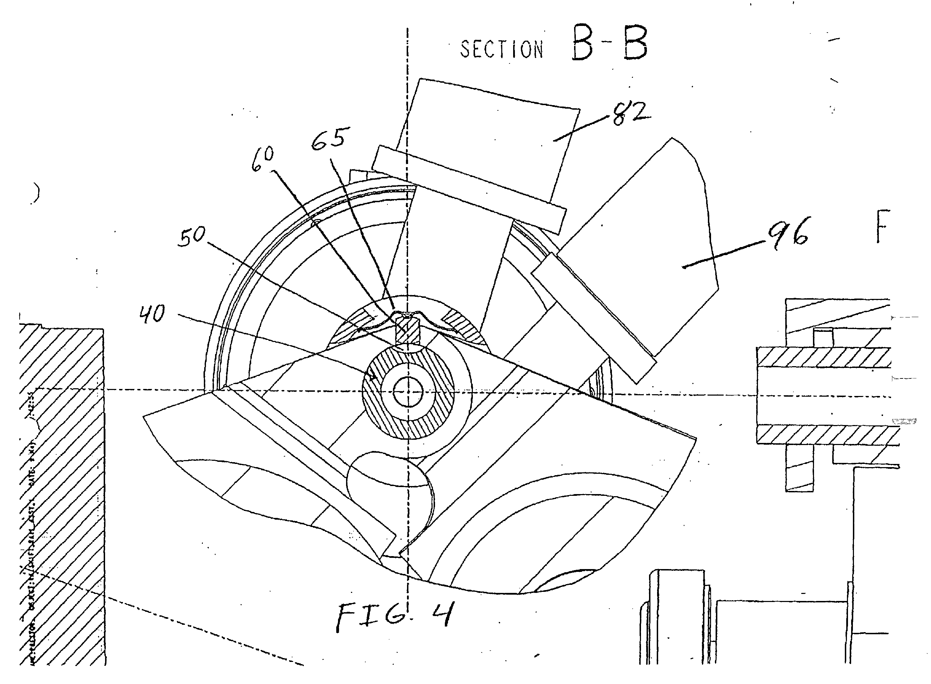

FIG. 4 is sectional view taken along section B-B of FIG. 3 revealing the cam, cam recess, actuation pin, resilient member and support rail.

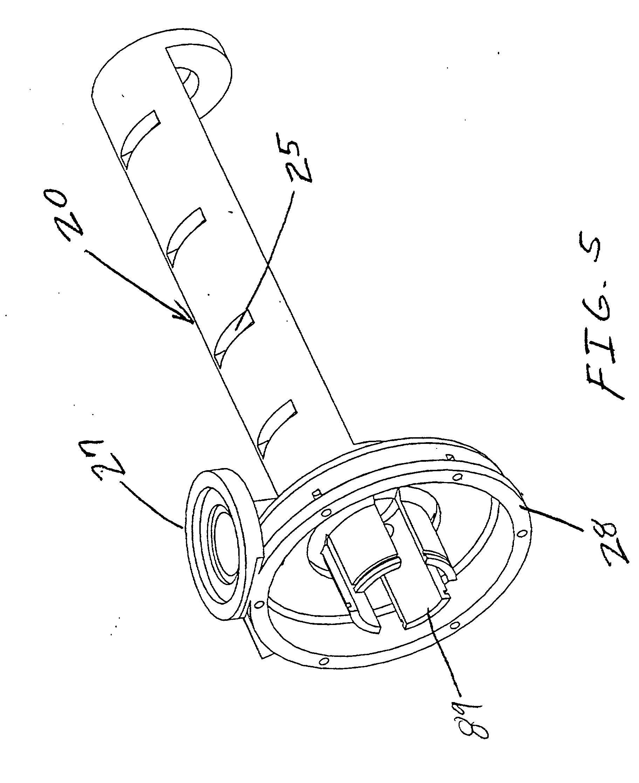

FIG. 5 is a perspective view of the support rail according the principles of the present invention.

FIG. 6 is a perspective view of the cam according the principles of the present invention.

FIG. 7 is a perspective view of an actuation sleeve and shift fork assembly.

FIG. 8 is a perspective view of the translational and rotational actuators according to the principles of the present invention.

FIG. 9 is another perspective view of the translational and rotational actuators of the present invention, revealing the operative elements therein.

### DETAILED DESCRIPTION OF THE PREFERRED EMBODIMENT

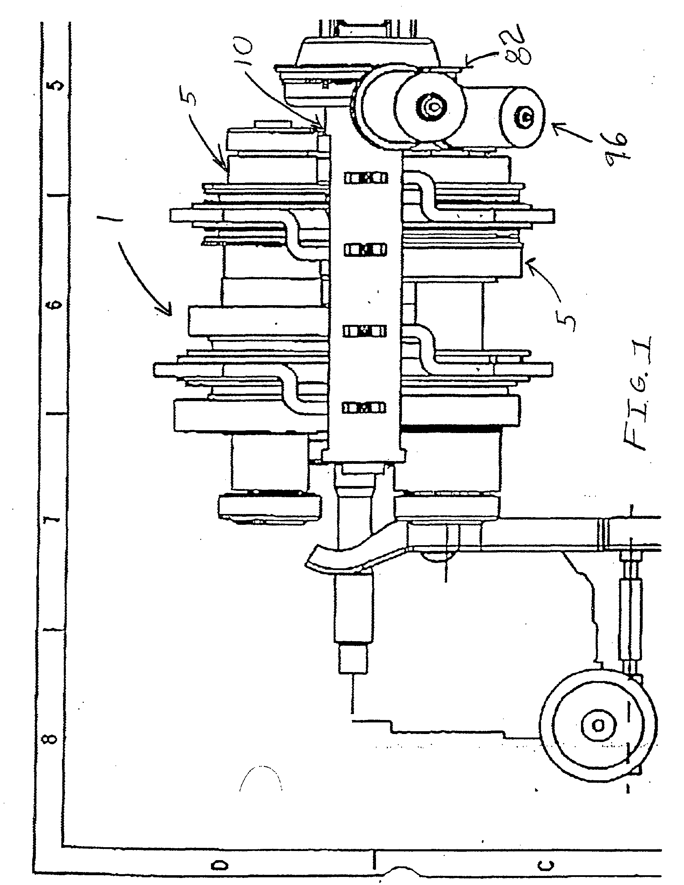

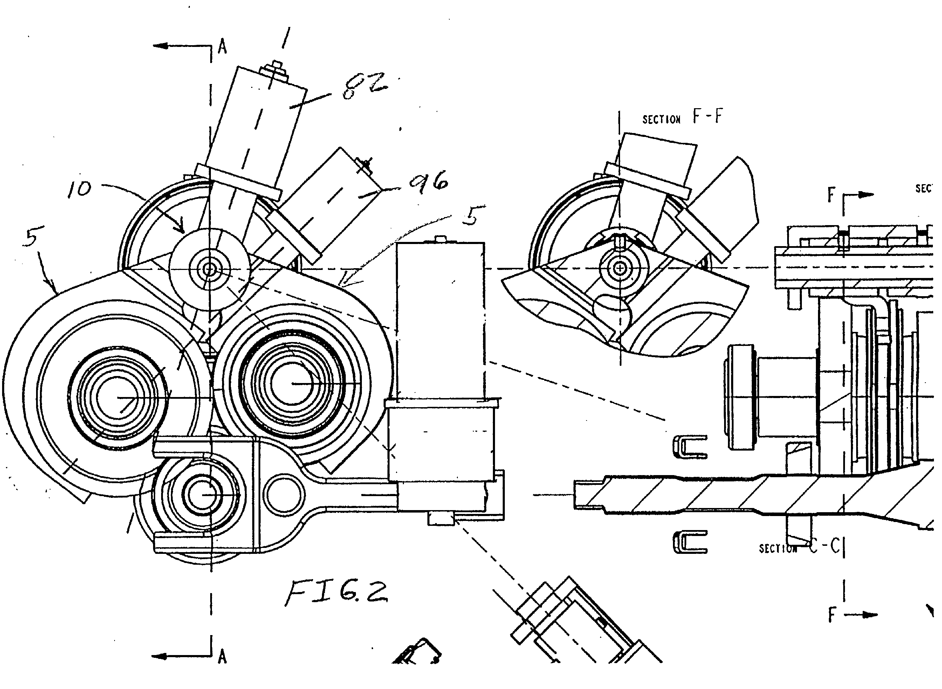

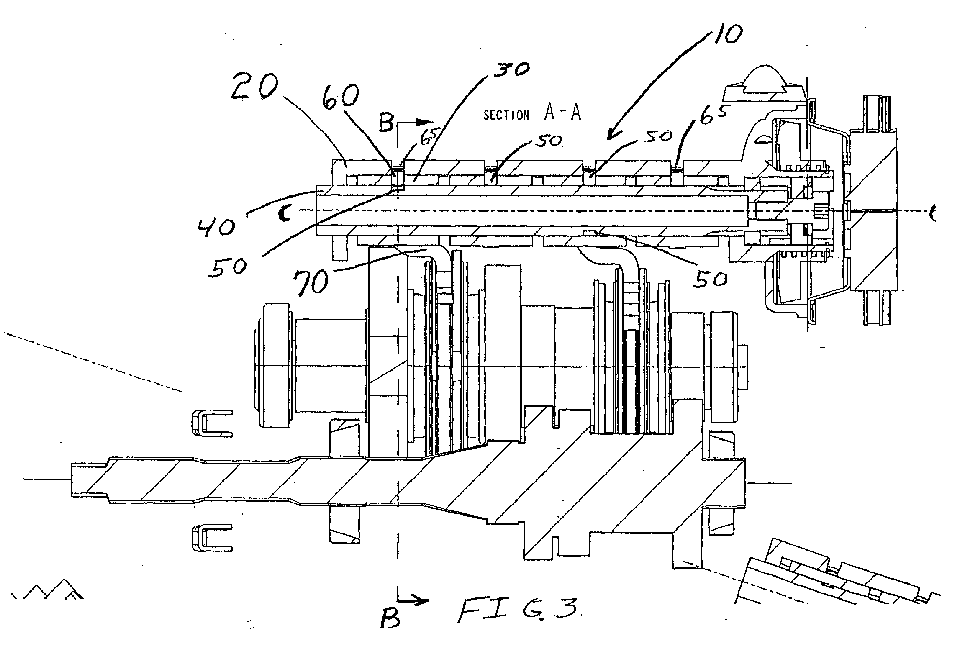

Referring now to FIG. 1, a top view of a transmission assembly 1 is show, revealing multiple gears 5 and a single rail shift actuator 10. FIG. 2 provides a front view, the front being the portion of the transmission which is closest to the engine, revealing the relative position of the single rail shift actuator 10 and gears 5. Referring now to FIG. 3, a sectional view of the single rail shift actuator 10 taken along section A-A of FIG. 2 is shown. The shift actuator 10 comprises a support rail 20, which in practice would be fixedly attached to a transmission case (not shown). The support rail has a plurality, at least two, of slots 25 disposed therein. Each slot 25 houses an actuation pin 60 and a resilient member 65, which in the present embodiment is a leaf spring 65.

A camshaft 40 is transversely and rotatably supported within the support rail 20. For purposes of description of the present invention the term "rotation" shall refer to motion about center line C-C of the camshaft 40, and translate, translation, translating and transverse shall refer to motion along center line C-C of camshaft 40.

The camshaft 40 has a plurality of radially and transversely disposed recesses 50 formed thereon. Each recess 50 corresponds with, that is transversely aligned with, each of the actuation pins 60.

A plurality of actuation sleeves 30 are mounted on the camshaft 40. Each of the actuation sleeves 30 has an aperture 35 for receiving one of the actuation pins 60. Each of the actuation pins 60 is at least partially disposed within each of the apertures 35. In operation, each actuation sleeve 30 is coupled to either the support rail 20, thereby grounding the actuation sleeve 30 to the transmission case, or the actuation sleeve 30 is coupled to the camshaft 40 for translational movement therewith. Regardless of whether an actuation sleeve 30 is coupled to the support rail 20 or the cam 40, each actuation pin 60 is at least partially disposed within the corresponding aperture 35.

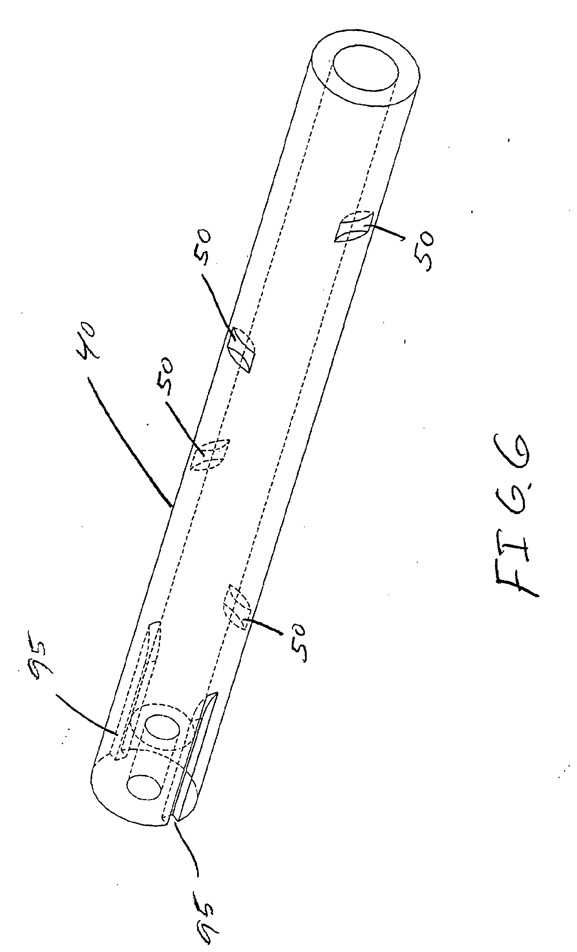

Referring now also to FIG. 6, one embodiment of the camshaft 40 according to the present invention is shown revealing the recesses 50 disposed about the cam 40. As such, it can be readily realized that by rotating cam 40 a different actuation sleeve 30 may be selected. Furthermore, it should become apparent that only one actuation sleeve 30 may be coupled to the cam 40 at a time. A corresponding leaf spring 65 will urge actuation pin 60 into to the corresponding recess 50 once a recess 50 is aligned with the corresponding actuation pin 60. Adequate clearance between the actuation pin 60 and support rail 20 is provided when a cam 40 is rotated to permit the actuation pin 60 to enter the corresponding recess 50 which allows a selected actuation sleeve 30 to move transversely relative to the support rail 20.

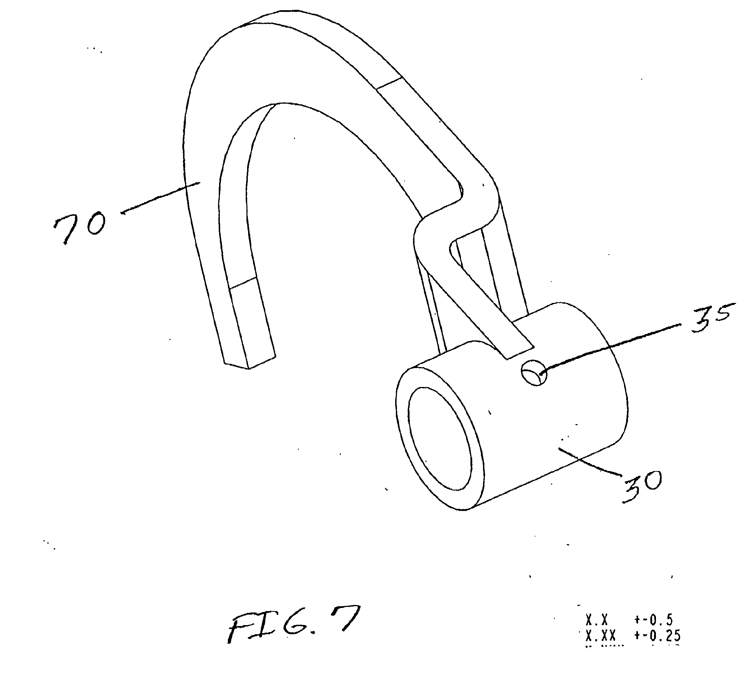

A plurality of shift of forks 70 are provided for selecting and deselecting gears 5. Each shift fork is fixedly attached to one of the actuation sleeves 30, as shown in FIG. 7. A shift fork 70 is selected by rotating the cam 40 and a gear selection or deselection is achieved by translating cam 40 once a shift fork 70 is selected.

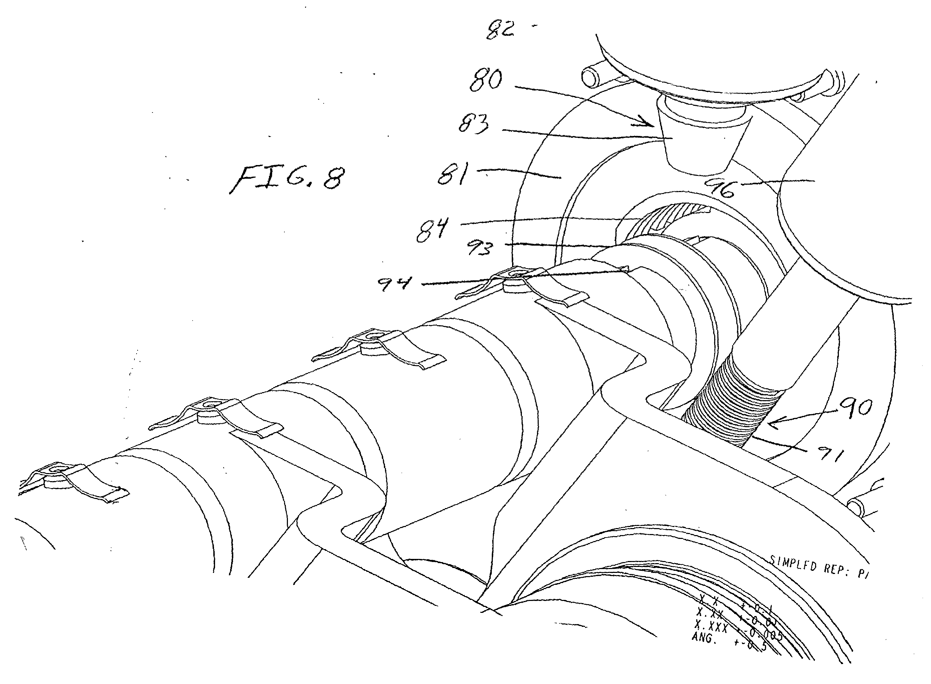

A rotation actuator 90 is provided for rotating the camshaft 40 to couple one of the actuation sleeves 30 to the camshaft 40 by aligning one of the recesses 50 with a corresponding actuation pin 60. As mentioned above, this causes the leaf spring 65 to urge the actuation pin 60 into the corresponding recess 50. Referring now to FIG. 8, the support rail 20 is removed, enabling the operative elements of the rotation actuator 90 to be revealed. Rotation actuator 90 includes a worm 91 that rotates a gear 92 having external teeth 93. The gear 92 also has internal teeth 94, which slide along keyways 95, as revealed in FIG. 6, that are cut into cam 40 to permit axial movement of the cam relative to the rotation actuator 90. An electric motor 96 provides rotational power to the worm 91 to drive gear 93 causing rotational motion to the cam 40. A rotational position sensor (not shown) indicates the relative position of the cam by generating a signal indicative thereof.

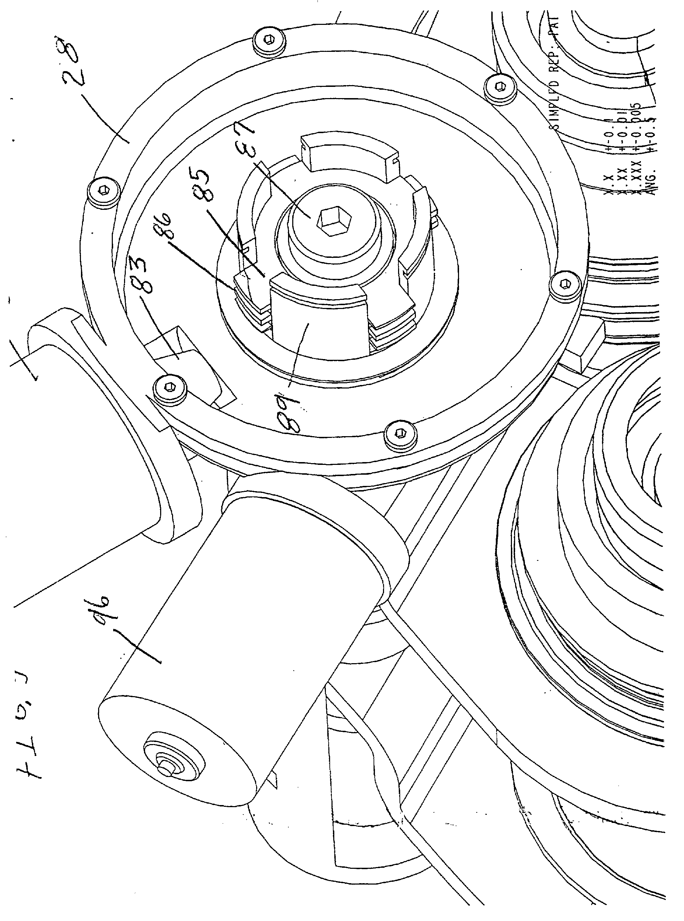

A translational actuator 80 includes a bevel gear 81 which is driven by a pinion gear 83 powered by electric motor 82. Bevel gear 81 also has internal threads 84 which drive a nut 85 as shown in FIG. 9. Nut 85 has a plurality of threads 86 which have been sectioned to fit within guides 89 disposed in housing 28 of support rail 20. The bevel gear 81 is disposed in the housing 28 and provides translational motion to cam 40 by rotating relative to nut 85. While bevel gear 81 rotates, guides 89 prevent nut 85 from rotating and therefor the nut 85 may only move in a translational direction. Nut 85 is fixedly attached to cam 40 by a bolt 87. The translational position of cam 40 is indicated by a translation position sensor (not shown).

Although electro-mechanical rotation and translation actuators are shown, it should become readily apparent to those skilled in the art that the electro-mechanical system revealed herein may be replaced by a hydraulic or a manual actuation system.

## Claims

1. A single rail shift actuator for a manual transmission, comprising:
a support rail adapted to be fixedly attached to a transmission case, said support rail having at least two slots disposed therein, each slot housing an actuation pin and a resilient member;
a camshaft transversely and rotatably supported within said support rail, said camshaft having at least two radially and transversely disposed recesses formed thereon, each recess corresponding with one of said actuation pins;
at least two actuation sleeves mounted on said camshaft, each of said actuation sleeves having an aperture for receiving one of said actuation pins, each of said actuation pins being at least partially disposed within each of said apertures;
at least two shift forks for selecting and deselecting gears, each shift fork being fixedly attached to one of said actuation sleeves;
a rotation actuator for rotating said camshaft to couple one of said actuation sleeves to said camshaft by aligning one of said recesses with one of said actuation pins, causing said resilient member to urge said actuation pin into said recesses; and
a translation actuator for translating said coupled actuation sleeve by translating said cam, causing said actuation sleeve to translate said shift fork to select or deselect gears.

2. A manual transmission assembly, comprising:
a plurality of gears including forward gears and a reverse gear;
a support rail fixedly attached to a transmission case, said support rail having at least two slots disposed therein, each slot housing an actuation pin and a resilient member;
a camshaft transversely and rotatably supported within said support rail, said camshaft having at least two radially and transversely disposed recesses formed thereon, each recess corresponding with one of said actuation pins;
at least two actuation sleeves mounted on said camshaft, each of said actuation sleeves having an aperture for receiving one of said actuation pins, each of said actuation pins being at least partially disposed within each of said apertures;
at least two shift forks for selecting and deselecting said gears, each shift fork being fixedly attached to one of said actuation sleeves;
a rotation actuator for rotating said camshaft to couple one of said actuation sleeves to said camshaft by aligning one of said recesses with one of said actuation pins, causing said resilient member to urge said actuation pin into said recesses; and
a translation actuator for translating said coupled actuation sleeve by translating said cam, causing said actuation sleeve to translate said shift fork to select or deselect said gears.
